# EUROPÄISCHE PATENTANMELDUNG

(11) **EP 3 939 824 A1**
(43) Veröffentlichungstag der Anmeldung: **19.01.2022**
(21) Anmeldenummer: 21184264.6
(22) Anmeldetag: 07.07.2021
(51) Int. Cl.: B60L 53/302, B60L 53/10

(54) **LADELEITUNG FÜR EIN ELEKTROFAHRZEUG**

(30) Priorität: 17.07.2020 DE 102020208964
(71) Anmelder: ContiTech Techno-Chemie GmbH, 61184 Karben (DE)
(72) Erfinder: Linzmaier, Markus, 30419 Hannover (DE); Kiel, Christian, 30419 Hannover (DE); Daniel, Gunther, 30419 Hannover (DE)
(74) Vertreter: Continental Corporation

(57) **Zusammenfassung**

Die Erfindung betrifft eine Ladeleitung (1) für ein Elektrofahrzeug, wobei die Ladeleitung (1) eine Mehrzahl von Strom- und Fluidleitungssträngen (6-12) umfasst. Der Erfindung lag die Aufgabe zugrunde, eine Ladeleitung (1) für ein Elektrofahrzeug zu schaffen, bei der die umfassten Strom- und Fluidleitungsstränge (6-12) in ihrer Position relativ zueinander verbleiben, auch wenn die Ladeleitung (1) bewegt wird. Diese Aufgabe wird dadurch gelöst, dass die Ladeleitung (1) einen Schutz- und Stützkörper (2) aufweist, der als längliches Profil aus elastomerem Material ausgebildet ist, wobei das Profil in Längsrichtung Schutz- und Stützkörpers 2 durchgehende Kavitäten (3a, b, c, d) aufweist, wobei die Durchmesser und die Anzahl der Kavitäten (3a, b, c, d) den Durchmessern und der Anzahl der umfassten Leitungsstränge (6-12) entspricht und wobei die Leitungsstränge (6-12) der Ladeleitung (1) in den Kavitäten (3a, b, c, d) angeordnet sind und der Schutz- und Stützkörper auf 2) sich mindestens abschnittsweise über die Länge der Ladeleitung (1) erstreckt.

## Beschreibung

Die Erfindung betrifft eine Ladeleitung für ein Elektrofahrzeug, wobei die Ladeleitung eine Mehrzahl von Strom- und Fluidleitungssträngen umfasst.

Elektrofahrzeuge beziehen ihren Strom derzeit vorwiegend aus Akkumulatoren die intermittierend aufgeladen werden müssen. Um die Ladezeiten zu verkürzen, ist es vorteilhaft, hohe Ladeströme zu verwenden. Nachteilig dabei ist, dass die elektrischen Leitungen dabei mehr oder weniger stark erwärmt werden.

Um trotzdem hohe Ladeströme einsetzen zu können, ohne dass die elektrischen Kabel zu dick sind und ohne sie zu überhitzen, ist es üblich, die Ladeleitungen zu kühlen. Dabei werden neben den elektrischen Leitungssträngen und den gegebenenfalls weiter vorhandenen Steuerleitungen auch Fluidleitungsstränge zu Ladeleitungen zusammengefasst, wobei durch die Fluidleitungsstränge entsprechende Kühlfluide hindurchleitbar sind.

Für eine gute Wärmeübertragung ist es erforderlich, die elektrischen Leitungsstränge mit den Fluidleitungssträngen optimal zu koppeln. Über die gesamte Länge der Ladeleitungen können sich die zusammengefassten Leitungsstränge jedoch gegeneinander verschieben und verdrehen, wobei die optimale Kupplung nicht immer gewährleistet ist.

In der US 2015 200 17 54 A1 ist ein entsprechendes Ladesystem offenbart. Die Strom, Signale oder Kühlfluid führenden Leitungsstränge werden an den jeweiligen Enden des Systems, also einerseits an der Stromversorgung, andererseits an dem Stecker zum Fahrzeug mit einer Vorrichtung gehalten, um mit den notwendigen Kontakten, Fluidanschlüssen oder Rückführungsvorrichtungen verbunden zu werden.

Im wesentlichen Verlauf des Systems verlaufen die Leitungsstränge jedoch in einer mehr oder weniger freien Anordnung zueinander, sodass auch hier eine optimale Wärmeübertragung nicht immer gegeben ist.

Der Erfindung lag die Aufgabe zugrunde, eine Ladeleitung für ein Elektrofahrzeug zu schaffen, mit der die genannten Nachteile verhindert, zumindestens aber minimiert.

Diese Aufgabe wird dadurch gelöst, dass die Ladeleitung einen Schutz- und Stützkörper aufweist, der als längliches Profil aus mindestens einem elastomeren Material ausgebildet ist, wobei das Profil in Längsrichtung des Schutz- und Stützkörpers durchgehende Kavitäten aufweist, wobei die Durchmesser und die Anzahl der Kavitäten den Durchmessern und der Anzahl der umfassten Leitungsstränge entsprechen und wobei die Leitungsstränge der Ladeleitung in den Kavitäten angeordnet sind und der Schutz- und Stützkörper sich mindestens abschnittsweise über die Länge der Ladeleitung erstreckt.

Ein derartig ausgebildeter Schutz- und Stützkörper hat den Vorteil, dass die einzelnen Leitungsstränge zueinander geführt sind und in der durch die Anordnung der Kavitäten vorgegebenen Lage zueinander verbleiben, auch wenn die Ladeleitung bewegt wird.

In einer Weiterbildung der Erfindung ist das elastomere Material ein thermoplastisches Elastomer.

Thermoplastische Elastomere haben den Vorteil, dass eine nachrangige Vulkanisation nicht erforderlich ist.

In einer Weiterbildung der Erfindung weist jede Kavität des Schutz- und Stützkörpers über ihre gesamte Länge einen Längsschlitz auf, der durch das elastomere Material des Schutz- und Stützkörpers hindurch verläuft und die jeweilige Kavität mit der Umgebung außerhalb des Schutz- und Stützkörpers verbindet.

Diese Anordnung hat den Vorteil, dass die entsprechenden Leitungsstränge separat in die Kavitäten des Schutz und Stützkörpers einlegbar sind.

In einer Weiterbildung der Erfindung ist der Schutz- und Stützkörper mittels Extrusion des elastomeren Materials erzeugt.

Die Extrusion ermöglicht eine kontinuierliche Fertigung, wobei sowohl die Kavitäten als auch die optional vorhandenen Längsschlitze einfach erzeugbar sind.

In einer Weiterbildung der Erfindung ist das Elastomermaterial durch Aufschäumen erzeugt.

Das Aufschäumen sorgt bei stabilem Aufbau für ein besonders geringes Gewicht.

In einer Weiterbildung der Erfindung weist das Elastomermaterial eine vorbestimmte Wärmeleitfähigkeit auf, die über den Querschnitt des Schutz- und Stützkörpers unterschiedlich sein kann.

Mit unterschiedlichen Wärmeleitfähigkeit ist die Wärmeübertragung innerhalb des Schutz- und Stützkörpers gut beeinflussbar.

In einer Weiterbildung der Erfindung ist der Schutz- und Stützkörper im 2K-Spritzgussverfahren aus mindestens zwei Elastomermaterialien hergestellt, wobei die Elastomermaterialien voneinander verschieden sein können.

Mit einem 2K-Spritzguss lassen sich beispielsweise Materialien verschiedener Wärmeleitfähigkeiten oder anderer Materialeigenschaften besonders einfach herstellen.

Die Erfindung betrifft weiter ein Verfahren zur Herstellung der erfindungsgemäßen Ladeleitung.

Der Erfindung lag die Aufgabe zugrunde, ein Verfahren zu schaffen, mit dem die erfindungsgemäße Ladeleitung herstellbar ist.

Diese Aufgabe wird dadurch gelöst, dass das Verfahren folgende Arbeitsschritte aufweist, nämlich
a) Bereitstellung einer Extrusion Vorrichtung mit einer Extrusionsform
b) Bereitstellung mindestens eines vorbestimmten Rohmaterials
c) Extrusion des Rohmaterials durch die Extrusionsform, dabei Ausformung eines Strangprofils, wobei das Strangprofil eine vorbestimmte Anzahl achsparalleler Kavitäten mit jeweils vorbestimmtem Durchmesser aufweist, die sich über die gesamte Länge des Strangprofils erstrecken und dabei Ausformung von achsparallelen Schlitzen, wobei sich jeder Schlitz jeweils radial von einer Kavität bis an den Außenumfang des Strangprofils und axial über die gesamte Länge des Strangprofils erstreckt.

In einer Weiterbildung weist das Verfahren mindestens einen weiteren Prozessschritt auf, nämlich
d) Vulkanisation des Strangprofils zu einem elastomeren Schutz- und Stützkörper. In einer Weiterbildung der Erfindung weist das Verfahren den folgenden weiteren Arbeitsschritt auf, nämlich
e) Einbringen von Leitungssträngen in die Kavitäten durch die Längsschlitze. Dieses Verfahren hat den Vorteil, dass ein Schutz- und Stützkörper herstellbar ist, der ein einfaches Anordnen der jeweils notwendigen Leitungsstränge in die Kavitäten ermöglicht. Die Leitungsstränge sind durch die Schlitze in die Kavitäten einsteckbar. Bei zu vulkanisierendem Elastomermaterial ist dies sowohl vor oder im Anschluss an die Vulkanisation im kontinuierlichen Betrieb möglich, bei thermoplastischen Elastomeren sowohl vor als auch nach der Aushärtung.

In einer Weiterbildung der Erfindung weist das Verfahren folgende Arbeitsschritte auf, nämlich
A) Bereitstellung mindestens einer Extrusionsvorrichtung mit Extrusionsform
B) Bereitstellung mindestens eines elastomeren Rohmaterials
C) Bereitstellung von elektrischen und/oder Fluidleitungssträngen
D) Extrusion des elastomeren Rohmaterials durch die Extrusionsform zu einem länglichen Schutz- und Stützkörper, wobei das Strangprofil eine vorbestimmte Anzahl achsparalleler Kavitäten mit jeweils vorbestimmtem Durchmesser aufweist, die sich über die gesamte Länge des Strangprofils erstrecken, dabei Zuführung der Leitungsstränge, wobei die Leitungsstränge durch die Extrusionsform geführt werden derart, dass sie in den extrudierten Kavitäten des elastomeren Rohmaterials zu liegen lommen.

In einer Weiterbildung der Erfindung weist das Verfahren folgenden weiteren Arbeitsschritt auf, nämlich
E) Vulkanisation des extrudierten Schutz- und Stützkörper zu einem fertig ausgebildeten elastomeren Schutz- und Stützkörper, wobei die Leitungsstränge im fertig extrudierten Schutz- und Stützkörper eine vorbestimmte Querschnittslage aufweisen

Ein derartiges Verfahren sorgt für eine feste und unverlierbare Anordnung der Leitungsstränge in dem Schutz- und Stützkörper.

In einer Weiterbildung der Erfindung weist das Verfahren mindestens folgenden weiteren Arbeitsschritt auf, nämlich
F) Extrusion mindestens einer Außenlage um den extrudierten Schutz- und Stützkörper

In einer Weiterbildung der Erfindung weist das Verfahren mindestens folgenden weiteren Arbeitsschritte auf, nämlich
G) Vulkanisation der mindestens einen Außenlage zu einem Außenschlauch,
wobei der Arbeitsschritt F sowohl nach dem Arbeitsschritt E als auch vor dem Arbeitsschritt E angeordnet sein kann, wobei im letzteren Fall die Arbeitsschritte E und G zusammenfallen.

Ein derartiges Verfahren hat den Vorteil, dass bereits nach dem Durchlaufen der Arbeitsschritte F) und G) eine fertige Ladeleitung mit Schutz- und Stützkörper und eingebrachten Leitungssträngen fertig produzierbar ist, ohne dass weitere Arbeitsschritte wie beispielsweise Einziehen in einen Schutzschlauch nötig sind.

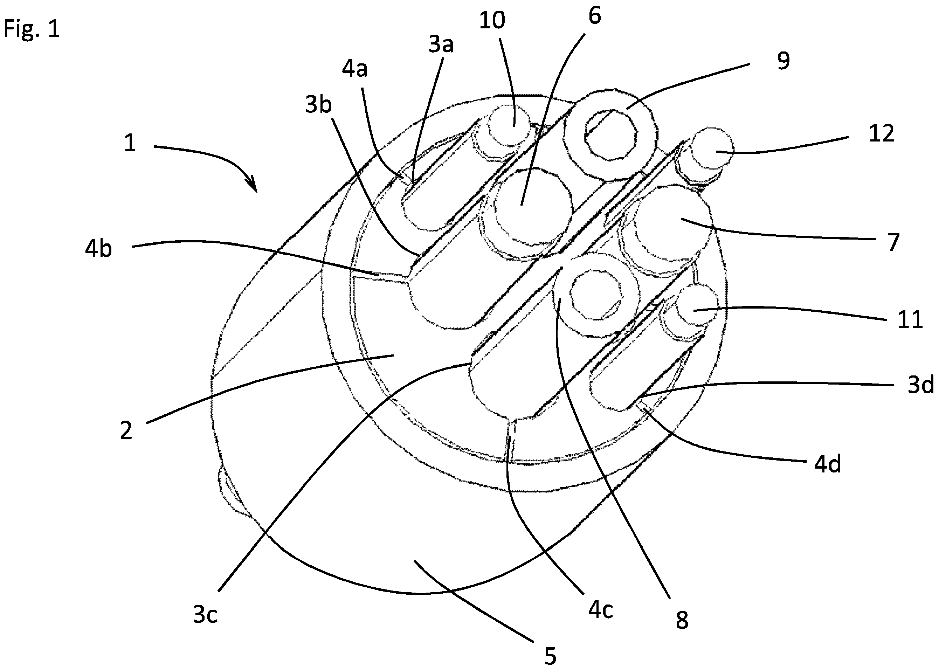

Anhand der Zeichnungen wird nachstehend ein Ausführungsbeispiel der Erfindung näher erläutert. Die Fig. 1 zeigt einen Ausschnitt einer Ladeleitung 1 für ein hier nicht gezeigtes Elektrofahrzeug. Die Ladeleitung 1 weist einen erfindungsgemäßen Schutz- und Stützkörper 2 auf, der aus elastomerem Material ausgebildet ist und Kavitäten 3a, 3b, 3c, 3d sowie drei weitere, hier verdeckte Kavitäten aufweist, die sich in Längsrichtung der Ladeleitung 1 erstrecken. Jede der Kavitäten weist einen Längsschlitz 4a, 4b, 4c und 4d sowie 3 weitere Längsschlitz auf, die den hier nicht sichtbaren Kavitäten zugeordnet sind.

Die Ladeleitung 1 weist außerdem einen Außenschlauch 5 auf, der den Schutz- und Stützkörper 2 umschließt.

In jeder der Kavitäten 3 ist ein Leitungsstrang 6, 7,8, 9,10, 11,12 angeordnet, wobei die Leitungsstränge 6 und 7 elektrische Leiter sind, durch die ein Strom fließen kann, wobei sich die Leitungsstränge 6 und 7 erwärmen. Die Leitungsstränge 8 und 9 sind Fluidleitungen, durch die ein hier nicht gezeigtes Kühlfluid fließen kann. Die Leitungsstränge 10 und 11 sind elektrische Steuer- und Signalleitungen und der Leitungsstrang 12 ist ein elektrischer Masseleiter.

Das elastische Material des Schutz- und Stützkörpers 2 weist eine gute Wärmeleitfähigkeit auf, sodass die Wärme, die in den Leitungssträngen 6 und 7 entsteht, gut hindurch fließen und von den Leitungssträngen 8 und 9 gut aufgenommen und abtransportiert werden kann.

Die Leitungsstränge 6-12 sind durch die Schlitze 4 einfach in die Kavitäten 3 einlegbar und der fertig konfektionierte Schutz- und Stützkörper 2 mit den Leitungssträngen 6-12 ist dann durch den Außenschlauch 5 gut gegen äußere Einwirkungen geschützt.

Dadurch, dass der Außenschlauch 5 den Schutz- und Stützkörper 2 relativ eng umschließt, ist sichergestellt, dass die Leitungsstränge 6-12 in ihrer Position relativ zueinander verbleiben, auch wenn die Ladeleitung 1 bewegt wird.

### Bezugszeichenliste

### (Teil der Beschreibung)

- 1: Ladeleitung
- 2: Schutz- und Stützkörper
- 3a, b, c, d: Kavitäten im Schutz- und Stützkörper 2
- 4a, b, c, d: Längsschlitze im Schutz- und Stützkörper 2
- 5: Außenschlauch
- 6, 7: Leitungsstränge, elektrische Leiter
- 8, 9: Leitungsstränge, Fluidleitungen
- 10, 11: Leitungsstränge, elektrische Steuer- und Signalleitungen
- 12: Leitungsstrang, elektrischer Masseleiter

## Patentansprüche

1. Ladeleitung (1) für ein Elektrofahrzeug, wobei die Ladeleitung (1) eine Mehrzahl von Strom- und Fluidleitungssträngen (6-12) umfasst, **dadurch gekennzeichnet, dass** die Ladeleitung (1) einen Schutz- und Stützkörper (2) aufweist, der als längliches Profil aus mindestens einem elastomeren Material ausgebildet ist, wobei das Profil in Längsrichtung des Schutz- und Stützkörpers 2 durchgehende Kavitäten (3a, b, c, d) aufweist, wobei die Durchmesser und die Anzahl der Kavitäten (3a, b, c, d) den Durchmessern und der Anzahl der umfassten Leitungsstränge (6-12) entsprechen und wobei die Leitungsstränge (6-12) der Ladeleitung (1) in den Kavitäten (3a, b, c, d) angeordnet sind und der Schutz- und Stützkörper (2) sich mindestens abschnittsweise über die Länge der Ladeleitung (1) erstreckt.

2. Ladeleitung nach Anspruch 1, **dadurch gekennzeichnet, dass** das elastomere Material ein thermoplastisches Elastomer ist.

3. Ladeleitung (1) nach Anspruch 1oder 2, **dadurch gekennzeichnet, dass** jede Kavität (3a, b, c, d) des Schutz- und Stützkörpers (2) über ihre gesamte Länge einen Längsschlitz (4a, b, c, d) aufweist, der durch das elastomere Material des Schutz- und Stützkörpers (2) hindurch verläuft und die jeweilige Kavität (3a, b, c, d) mit der Umgebung außerhalb des Schutz- und Stützkörpers (2) verbindet.

4. Ladeleitung (1) nach Anspruch 1, 2 oder 3, **dadurch gekennzeichnet, dass** der Schutz- und Stützkörper (2) mittels Extrusion des elastomeren Materials erzeugt ist.

5. Ladeleitung (1) nach mindestens einem der vorstehenden Ansprüche, **dadurch gekennzeichnet, dass** das Elastomermaterial durch Aufschäumen erzeugt ist.

6. Ladeleitung (1) nach mindestens einem der vorstehenden Ansprüche, **dadurch gekennzeichnet, dass** das Elastomermaterial eine vorbestimmte Wärmeleitfähigkeit aufweist, die über den Querschnitt des Schutz- und Stützkörpers (2) unterschiedlich sein kann.

7. Ladeleitung (1) nach Anspruch 6, **dadurch gekennzeichnet, dass** der Schutz- und Stützkörper (2) im 2K-Spritzgussverfahren aus mindestens zwei Elastomermaterialien hergestellt ist, wobei die Elastomermaterialien voneinander verschieden sein können.

8. Verfahren zur Herstellung einer erfindungsgemäßen Ladeleitung (1), **dadurch gekennzeichnet, dass** das Verfahren folgende Arbeitsschritte aufweist, nämlich
a) Bereitstellung einer Extrusionsvorrichtung mit einer Extrusionsform
b) Bereitstellung mindestens eines vorbestimmten Rohmaterials
c) Extrusion des Rohmaterials durch die Extrusionsform, dabei Ausformung eines Strangprofils (2), wobei das Strangprofil (2) eine vorbestimmte Anzahl achsparalleler Kavitäten (3a, b, c, d) mit jeweils vorbestimmtem Durchmesser aufweist, die sich über die gesamte Länge des Strangprofils (2) erstrecken und dabei Ausformung von achsparallelen Schlitzen (4a, b, c, d), wobei sich jeder Schlitz (4a, b, c, d) jeweils radial von einer Kavität (3a, b, c,
d) bis an den Außenumfang des Strangprofils (2) und axial über die gesamte Länge des Strangprofils (2) erstreckt.

9. Verfahren nach Anspruch 8, **dadurch gekennzeichnet, dass** das Verfahren mindestens einen weiteren Arbeitsschritt aufweist, nämlich d) Vulkanisation des Strangprofils (2) zu einem elastomeren Schutz- und Stützkörper (2).

10. Verfahren Anspruch 8, **dadurch gekennzeichnet, dass** das Verfahren den folgenden weiteren Arbeitsschritt aufweist, nämlich
e) Einbringen von Leitungssträngen in die Kavitäten durch die Längsschlitze.

11. Verfahren zur Herstellung einer erfindungsgemäßen Ladeleitung (1), **dadurch gekennzeichnet, dass** das Verfahren folgende Arbeitsschritte aufweist, nämlich
A) Bereitstellung mindestens einer Extrusionsvorrichtung mit Extrusionsform
B) Bereitstellung mindestens eines elastomeren Rohmaterials
C) Bereitstellung von elektrischen und/oder Fluidleitungssträngen
D) Extrusion des elastomeren Rohmaterials durch die Extrusionsform zu einem länglichen Schutz- und Stützkörper, wobei das Strangprofil eine vorbestimmte Anzahl achsparalleler Kavitäten mit jeweils vorbestimmtem Durchmesser aufweist, die sich über die gesamte Länge des Strangprofils erstrecken, dabei Zuführung der Leitungsstränge, wobei die Leitungsstränge durch die Extrusionsform geführt werden derart, dass sie in den extrudierten Kavitäten des elastomeren Rohmaterials zu liegen kommen.

12. Verfahren nach Anspruch 11, **dadurch gekennzeichnet, dass** das verfahren mindestens einen weiteren Arbeitsschritt Aufweist, nämlich
E) Vulkanisation des extrudierten Schutz- und Stützkörper zu einem fertig ausgebildeten elastomeren Schutz- und Stützkörper, wobei die Leitungsstränge im fertig extrudierten Schutz- und Stützkörper eine vorbestimmte Querschnittslage aufweisen.

13. Verfahren nach Anspruch 11, **dadurch gekennzeichnet, dass** das Verfahren mindestens folgende Arbeitsschritte auf, nämlich
F) Extrusion mindestens einer Außenlage um den extrudierten Schutz- und Stützkörper.

14. Verfahren nach Anspruch 13, **dadurch gekennzeichnet, dass** das Verfahren mindestens folgende Arbeitsschritte auf, nämlich
G) Vulkanisation der mindestens einen Außenlage zu einem Außenschlauch,wobei der Arbeitsschritt F sowohl nach dem Arbeitsschritt E als auch vor dem Arbeitsschritt E angeordnet sein kann, wobei im letzteren Fall die Arbeitsschritte E und G zusammenfallen.
